# EUROPÄISCHE PATENTSCHRIFT

(11) **EP 0 988 126 B1**
(45) Veröffentlichungstag und Bekanntmachung des Hinweises auf die Patenterteilung: **09.01.2002**
(21) Anmeldenummer: 98933595.5
(22) Anmeldetag: 05.06.1998
(51) Int. Cl.: B23D 47/02, B23D 45/06, B27B 5/20, B27B 17/00

(54) **TRANSPORTABLE TISCHKREISSÄGE**
TRANSPORTABLE BENCH CIRCULAR SAW
SCIE CIRCULAIRE A TABLE TRANSPORTABLE

(30) Priorität: 09.06.1997 DE 29710032 U; 19.06.1997 DE 29710712 U; 28.11.1997 DE 29721091 U
(43) Veröffentlichungstag der Anmeldung: 29.03.2000
(73) Patentinhaber: Elektra Beckum Aktiengesellschaft, D-49716 Meppen (DE)
(72) Erfinder: RUGEN, Hermann, 49716 Meppen (DE); LANDSBERG, Peter, 49716 Meppen (DE); RAASCH, Klaus, 49744 Geesle (DE); AFTING, Andreas, 48488 Emsbüren (DE)
(74) Vertreter: von Rohr, Hans Wilhelm, Dipl.-Phys.
(86) Internationale Anmeldenummer: EP9803374
(87) Internationale Veröffentlichungsnummer: WO9856529

(56) Entgegenhaltungen:
- EP-A- 0 014 869
- FR-A- 657 957
- FR-A- 1 397 855
- US-A- 2 872 955

## Beschreibung

Die Erfindung betrifft eine transportable Tischkreissäge mit den Merkmalen des Oberbegriffs von Anspruch 1. Die Lehre der vorliegenden Erfindung behandelt also transportable Maschinen, aber keine in der Hand gehaltenen Maschinen.

Im Bereich der stationären Holzbearbeitungsmaschinen (oder auch Metallbearbeitungsmaschinen, die hier ohne daß das im weiteren immer ausdrücklich gesagt werden soll, mit im Blickfeld liegen) gibt es verschiedene Typen von Kreissägen.

Man findet hier Tischkreissägen als Baukreissägen, bei denen das Sägeblatt nur in der Höhe verstellbar ist. Eine weiter ausgestaltete Tischkreissäge hat nicht nur ein in der Höhe verstellbares Sägeaggregat, bei dieser ist das Sägeaggregat vielmehr sowohl in der Höhe als auch in der Seitenneigung zumindest nach einer Seite stufenlos oder stufenweise verstellbar. Mit einer Tischkreissäge, deren Sägeaggregat bezüglich der Gehrungsschnittachse nach einer Seite hin seitenneigbar ist, sind Gehrungsschnitte in einer Schnittebene durchführbar. Schifterschnitte, das sind Gehrungsschnitte, die in der Schnittebene um einen wählbaren Winkel geneigt sind, lassen sich nur dadurch herstellen, daß man das Werkstück auf der Werkstückauflagefläche an Winkelanschlägen in dem gewünschten Winkel ausrichtet.

Eine in der Handhabung weiter verbesserte Tischkreissäge ist eine Unterflur-Zugkreissäge. Bei einer Unterflur-Zugkreissäge kann das Sägeaggregat nicht nur in der Höhe verstellbar und bezüglich der Gehrungsschnittachse zur Seite hin neigbar sein, sondern das Sägeaggregat kann auch noch in Längsrichtung in dem Sägeschlitz in der Tischplatte von der hintersten Stellung bis nach vorne gezogen werden. Dadurch wird die Schnittlänge wesentlich größer, ein Werkstück kann fixiert werden und auf der Werkstückauflagefläche liegenbleiben, während das Kreissägeblatt durch das Werkstück gezogen wird.

Von einer als Unterflur-Zugkreissäge ausgeführten Tischkreissäge geht die Lehre der vorliegenden Erfindung aus (EP - A - 0 615 807). Mit einer Unterflur-Zugkreissäge kann man Schifterschnitte ebenfalls nur mit Verlagerung des Werkstückes herstellen. Will man ein Werkstück mit einem in der Ebene der Werkstückauflagefläche bemessenen Winkel schneiden, so muß man auch hier das Werkstück an Winkelanschlägen in der gewünschten Winkelstellung gegenüber dem Kreissägeblatt ausrichten.

Den Vorteil der Ausführbarkeit von Schifterschnitten ohne Verlagerung des Werkstückes hat eine Kapp- und Gehrungssäge. Bei dieser befindet sich das Sägeaggregat auf der Oberseite der Tischplatte. Zur Ausführung von Kappschnitten kann das Sägeaggregat um eine horizontale Schwenkachse auf die Werkstückauflagefläche der Tischplatte heruntergeschwenkt werden. Ist das Sägeaggregat auf Zugstangen ziehbar, so sind größere Schnittlängen erreichbar. Eine erste Gehrungsschnittachse liegt auch hier etwa in der Ebene der Werkstückauflagefläche horizontal. Die Tischplatte ist aber zusätzlich noch im Außengehäuse bzw. in einer Umfangsplatte des Außengehäuses um eine senkrecht zur Werkstückauflagefläche orientierte Hochachse jedenfalls begrenzt, meist ± 45 Grad drehbar. Die Hochachse stellt die zweite Gehrungsschnittachse dar. Damit sind dann Gehrungsschnitte in zwei zueinander senkrecht stehenden Schnittebenen, also Schifterschnitte ausführbar.

Eine Kapp- und Gehrungssäge hat regelmäßig den Nachteil, daß sehr große Werkstücke nicht geschnitten werden können, weil die Schnittlänge nicht ausreicht. Wegen des oberhalb der Tischplatte angeordneten Sägeaggregates kann nämlich ein großes plattenförmiges Werkstück nicht am Kreissägeblatt vorbeigeschoben werden.

Die Vorteile einer Tischkreissäge mit den Vorteilen einer Kapp- und Gehrungssäge verbindet eine Kapp-, Gehrungs- und Tischkreissäge. Bei einer Kapp-, Gehrungs- und Tischkreissäge ist die Tischplatte im Außengehäuse um 180° wendbar gelagert. An einer Seite der Tischplatte ist das Sägeaggregat angebracht. Befindet sich die Tischplatte in der Position mit dem Sägeaggregat auf der Oberseite, so kann die Säge als Kapp- und Gehrungssäge verwendet werden. Dazu ist die Tischplatte selbst in die an sich im Außengehäuse wendbar gelagerte Umfangsplatte drehbar eingelassen. In der Tischsägeposition befindet sich das Sägeaggregat unter der Tischplatte und ist in einer Tischsägeposition fixiert, so daß das Kreissägeblatt von unten durch den Sägeschlitz nach oben hindurchragt. In dieser Position läßt sich die Tischplatte in der Umfangsplatte nicht um die Hochachse drehen, die Tischkreissäge hat hier ihre übliche Funktion. Da das Sägeaggregat nicht ausziehbar ist, ist die Schnittlänge in der Kappsägeposition vom Durchmesser des Sägeblattes begrenzt.

Die Verlagerung des Werkstückes auf der Werkstückauflagefläche zur Erzielung von Gehrungsschnitten in der Schnittebene oder Schifterschnitten hat insbesondere bei beengten Platzverhältnissen erheblich Probleme. Steht eine solche Sägeeinrichtung beispielsweise in einem Gang, so gibt es für langgestreckte Werkstücke im wesentlichen nur eine mögliche Ausrichtung. Die Ausrichtung des Kreissägeblattes gegenüber dem Werkstück sollte dabei also möglichst durch Veränderung der Lage des Kreissägeblattes, nicht des Werkstückes, erfolgen können.

Die zuvor aufgezeigte Problematik ist bei einer Tischkreissäge, die in eine langgestreckte Werkbank integriert ist, bereits ansatzweise gelöst worden (US - A - 2,513,873). Die langgestreckte Werkbank steht hier auf vier einklappbaren Standbeinen. Am rechten Ende der langgestreckten Werkbank ist in diese langgestreckte Werkbank auf als Gleitlager oder Kugellager ausgeführten Drehlagern eine drehbare Tischplatte eingelassen. Ein Sägeaggregat mit Kreissägeblattist unter der Tischplatte angeordnet und kann gegenüber der Tischplatte in Zugrichtung verschoben werden, wodurch sich das Kreissägeblatt in Zugrichtung in einem Sägeschlitz bewegt, der sich über einen Großteil der Länge der Tischplatte erstreckt. Da sich das Sägeaggregat am rechten Rand in einem überstehenden Bereich der Werkbank befindet, kann man die Tischplatte mit dem darunter hängenden, in Zugrichtung verschiebbaren Sägeaggregat um die senkrecht zur Werkstückauflagefläche orientierte Hochachse drehen.

Der Erfindung liegt die Aufgabe zugrunde, die bekannte, transportable Tischkreissäge der eingangs erläuterten Art in Richtung auf umfassende Sägefunktionen weiterzubilden, so daß jedenfalls auch Schifterschnitte ausgeführt werden können, ohne daß das Werkstück verlagert werden muß.

Die zuvor aufgezeigte Aufgabe ist gelöst bei einer transportablen Tischkreissäge mit den Merkmalen des Oberbegriffs von Anspruch 1 durch die Merkmale des kennzeichnenden Teils von Anspruch 1.

Erfindungsgemäß ist die transportable Tischkreissäge mit dem in Draufsicht annähernd quadratische Abmessungen aufweisenden Außengehäuse mit einer nicht wendbaren Tischplatte versehen. Diese Tischplatte ist aber um eine senkrecht zur Werkstückauflagefläche orientierte Hochachse drehbar hier in der Umfangsplatte des Außengehäuses gelagert. Das Sägeaggregat ist mit der Tischplatte um die Hochachse drehbar.

Mit der erfindungsgemäßen Tischkreissäge werden durch das Drehen der Tischplatte auch winklige Querschnitte und Schifterschnitte sowie Längsschnitte in Werkstücken (bei Drehstellung 90°) möglich, ohne die Winkellage des Werkstücks auf der Werkstückauflagefläche zu verändern. Das hat die positive Folge, daß die erfindungsgemäße Tischkreissäge mit allen eventuell angebrachten Verbreiterungen und Verlängerungen auch an beengten Stellen, insbesondere in engen Fluren und Gängen eingesetzt werden kann.

Die Konzeption der erfindungsgemäßen transportablen Tischkreissäge wird erst dadurch möglich, daß das Außengehäuse von der Seite gesehen wie ein liegendes U gestaltet ist. In der so geschaffenen, von der Vorderseite ausgehenden, sich über die volle Breite des Außengehäuses unter der Tischplatte erstreckenden Ausnehmung läßt sich das Betätigungselement für die Schwenkung der Tischplatte frei nach rechts und links schwenken.

Bevorzugte Ausgestaltungen und Weiterbildungen der erfindungsgemäßen transportablen Tischkreissäge sind Gegenstand der Unteransprüche.

Im folgenden wird die Erfindung anhand einer lediglich ein Ausführungsbeispiel darstellenden Zeichnung näher erläutert. In der Zeichnung zeigt
- Fig. 1: in schematischer Darstellung, in perspektivischer Ansicht, stark vereinfacht ein bevorzugtes Ausführungsbeispiel einer erfindungsgemäßen Tischkreissäge mit Kapp-, Gehrungs-, Tisch- und Unterflur-Zugfunktion,
- Fig. 2: zum Zwecke der Erläuterung der grundsätzlichen Zusammenhänge eine Tischkreissäge des Standes der Technik in Form einer Unterflur-Zugkreissäge,
- Fig. 3: in einer schematischen Darstellung, in perspektivischer Ansicht ein weiteres Ausführungsbeispiel einer erfindungsgemäßen transportablen Tischkreissäge,
- Fig. 4: in einer vergrößerten Darstellung, ausschnittweise, den Bereich der Ausnehmung mit Betätigungselement der transportablen Tischkreissäge aus Fig. 3,
- Fig. 5: in einer Fig. 1 entsprechenden Darstellung eine modifizierte Ausführungsform der Tischkreissäge aus Fig. 1,
- Fig. 6: teilweise im Schnitt, den Bereich des Kreissägeblattes einer erfindungsgemäßen Tischkreissäge mit Späneabsaugung,
- Fig. 7: in einer perspektivischen Darstellung eine Tischverlängerung an einer erfindungsgemäßen transportablen Tischkreissäge,
- Fig. 8: in einer Fig. 3 entsprechenden Darstellung ein weiteres Ausführungsbeispiel einer erfindungsgemäßen transportablen Tischkreissäge, hier mit einem Kettensägeblatt statt eines Kreissägeblattes.

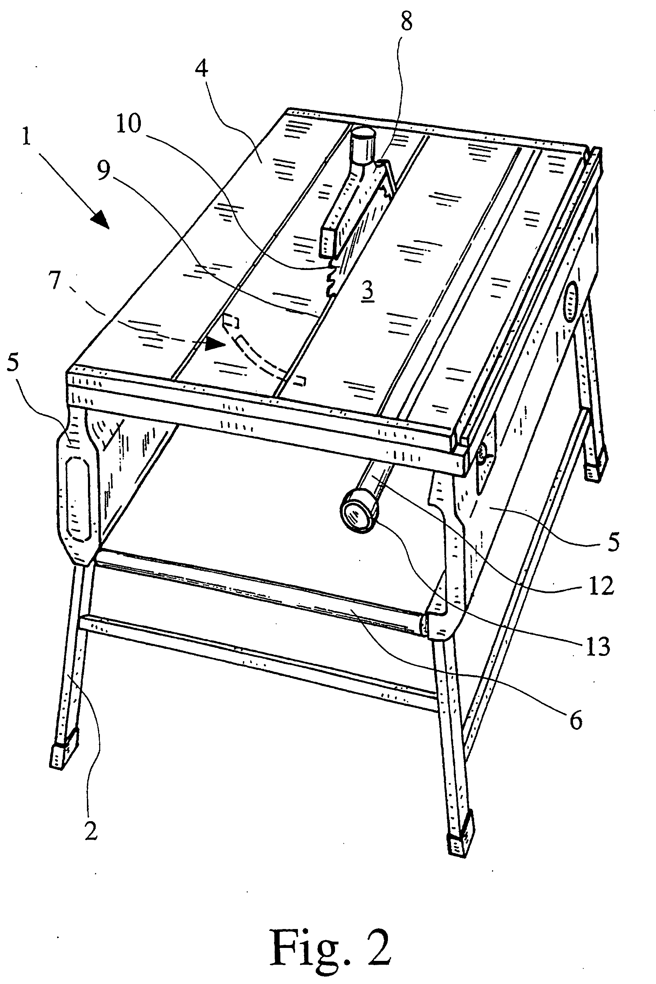

Zur Erläuterung der grundlegenden Zusammenhänge wird zunächst Fig. 2 erläutert. Fig. 2 zeigt eine aus dem Stand der Technik bekannte transportable Tischkreissäge (EP - A - 0 615 807) in der Ausführung als Unterflur-Zugkreissäge.

Diese zeigt zunächst ein Außengehäuse 1, das auf einem vom Außengehäuse 1 trennbaren Untergestell 2 steht, das in an sich bekannter Weise zusammenfaltbar ist. Dadurch wird die gesamte Tischkreissäge leichter transportabel.

Das Außengehäuse 1 weist zunächst eine eine Werkstückauflagefläche 3 bildende Tischplatte 4 auf, die zusammen mit Seitenwangen 5 und mindestens zwei die Seitenwangen 5 unten verbindenden Querstangen 6 die die Verwindungssteifigkeit gewährleistenden Strukturelemente des Außengehäuses 1 bildet.

Unter der Tischplatte 4 ist im Außengehäuse 1 ein Sägeaggregat 7 angeordnet, das in Fig. 2 nur angedeutet ist und jedenfalls einen Antriebsmotor und ein die Tischplatte 4 von unten her in einem Sägeschlitz 9 durchsetzendes Kreissägeblatt 10 aufweist. Das Kreissägeblatt 10 kann unmittelbar auf die Welle des elektrischen Antriebsmotors aufgeflanscht sein, es kann aber auch über Übertragungselemente von dem beabstandeten Antriebsmotor angetrieben werden. Man erkennt einen Spaltkeil 8 mit Schutzhaube.

Wie Fig. 2 schon erkennen läßt, erstreckt sich der Sägeschlitz 9 im wesentlichen über die volle Länge der Tischplatte 4 und definiert damit eine Längsrichtung der Tischkreissäge (parallel zu den Seitenwangen 5 im hier dargestellten Ausführungsbeispiel). Das Sägeaggregat 7 ist dabei an in Längsrichtung verlaufenden Führungsschienen in Längsrichtung verschiebbar, und zwar betätigt durch einen Zugstab 12, von dem in Fig. 2 in erster Linie ein Zugknauf 13 zu erkennen ist, da sich das Sägeaggregat 7 in einer hinteren Stellung befindet.

Durch die Längsverschiebbarkeit des Sägeaggregates 7 läßt sich das Kreissägeblatt 10 in Längsrichtung im Sägeschlitz 9 bewegen, daher kommt die Bezeichnung Unterflur-Zugkreissäge. Der Vorteil der Unterflur-Zugkreissäge ist eben der grundsätzliche bauliche Charakter der Tischkreissäge, bei der oberhalb der Tischplatte 4 auf der Werkstückauflagefläche 3 nur der aufragende Teil des Kreissägeblattes 10 erscheint, so daß großflächige Werkstücke an dem Kreissägeblatt 10 vorbeigeschoben werden können.

Aufgrund der Funktion der Tischkreissäge lassen sich durch Änderung der Winkelstellung des Werkstückes auf der Werkstückauflagefläche 3 auch Doppel-Gehrungsschnitte (Schifterschnitte) ausführen. Dazu ist wiederum die Zugfunktion zweckmäßig nutzbar, weil dann das Werkstück nicht in der schrägen Position relativ zum Kreissägeblatt 10 verschoben werden muß, sondern das Kreissägeblatt 10 durch das Werkstück hindurchgezogen werden kann.

All das ist weiter oben im allgemeinen Teil der Beschreibung in der Beschreibungseinleitung ja auch schon im großen und ganzen erläutert worden.

Die Vorteile einer Kapp-, Gehrungs- und Tischkreissäge gegenüber einer Unterflur-Zugkreissäge sind im allgemeinen Teil der Beschreibung erläutert worden.

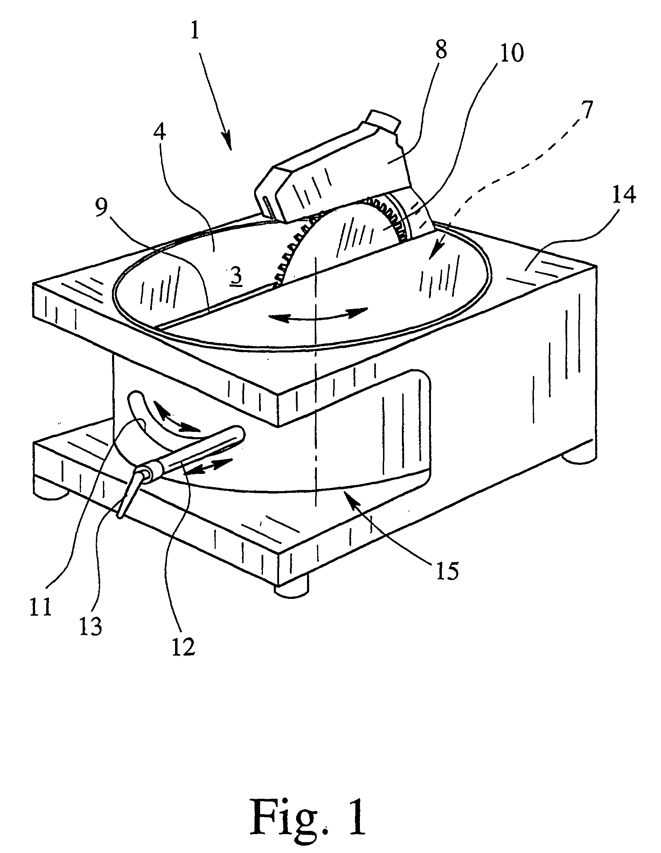

Fig. 1 zeigt nun eine transportable Tischkreissäge, die die Funktionen einer Kapp-, Gehrungs- und Tischkreissäge praktisch in eine Tischkreissäge mit feststehender Tischplatte 4 bzw. eine entsprechende Unterflur-Zugkreissäge integriert. Die Tischplatte 4 ist also im Außengehäuse nicht wendbar angeordnet. Sie ist aber mit ihrem Sägeschlitz 9 um eine senkrecht zur Werkstückauflagefläche 3 orientierte Hochachse drehbar im Außengehäuse 1, vorzugsweise in einer feststehenden Umfangsplatte 14 des Außengehäuses 1 gelagert. Das Sägeaggregat 7 ist mit der Tischplatte 4 gemeinsam um die Hochachse drehbar, so daß das Kreissägeblatt 10 in jeder Winkelstellung der Tischplatte 4 bezüglich der Hochachse im Sägeschlitz 9 in Zugrichtung bewegbar ist.

Das Sägeaggregat 7 kann auf einer eigenen Drehlagerung im Außengehäuse 1 laufen und mit der Tischplatte 4 bewegungsgekoppelt sein, es kann aber auch an der Tischplatte 4 selbst gelagert also mit deren Drehlagerung gemeinsam drehbar sein.

Mit dieser Maßnahme werden in ein und derselben transportablen Tischkreissäge alle Funktionen, die zuvor erläutert worden sind, integriert. Gegenüber einer reinen Unterflur-Zugkreissäge hat die erfindungsgemäße Tischkreissäge den Vorteil, daß durch Drehen der Tischplatte 4 auch winklige Querschnitte, Schifterschnitte und Längsschnitte ohne Veränderung der Winkellage des Werkstückes möglich sind. Das hat zur Folge, daß die erfindungsgemäße Tischkreissäge 4 mit allen eventuell angebrachten Verbreiterungen und Verlängerungen auch an beengten Stellen, insbesondere in engen Fluren und Gängen eingesetzt werden kann. Das gilt insbesondere bei Nutzung der Zugfunktion. Gegenüber einer Kapp-, Gehrungs- und Tischkreissäge hat die erfindungsgemäße Tischkreissäge den Vorteil, daß die Konstruktion sehr viel einfacher ist, weil die Tischplatte 4 nicht wendbar im Außengehäuse 1 angebracht werden muß. Außerdem ist eine Tischkreissäge wegen der Lage des Sägeaggregates 7 systematisch anwendungsgerechter und wesentlich standsicherer als eine Säge mit oberhalb der Tischplatte 4 befindlichem Sägeaggregat.

Das Sägeaggregat 7 ist im dargestellten Ausführungsbeispiel an der Tischplatte 4 in Zugrichtung verschiebbar gelagert. Dazu hängt es hier an Führungsschienen an der Tischplatte 4 und ist mit der Tischplatte 4 drehbar. Ein Schlitten für das Sägeaggregat 7 ist hängend angebracht und die Führungsschienen sind entweder durch von oben her die Tischplatte 4 durchsetzende Schrauben oder von unten her in die Tischplatte 4 eingedrehte Schrauben an der Tischplatte 4 befestigt oder selbst an der Tischplatte 4 integral angeformt.

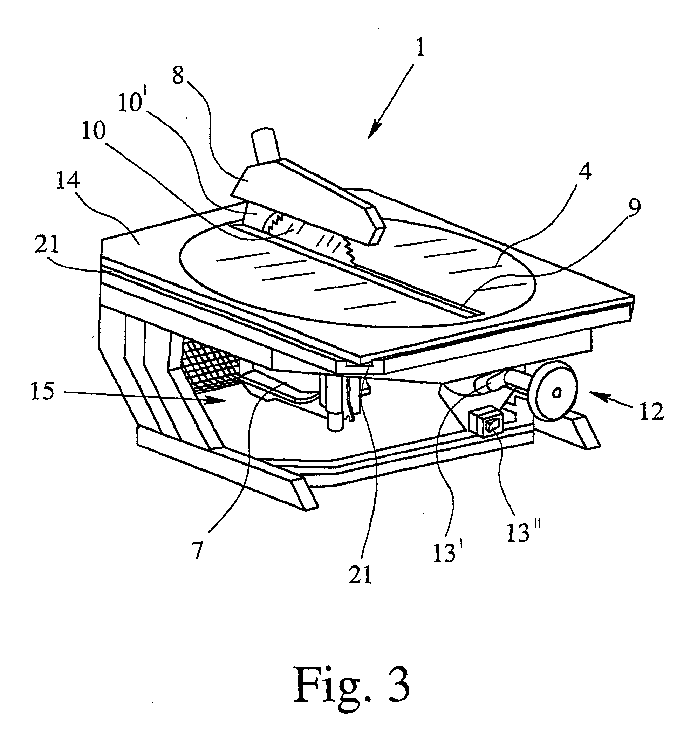

Die Fig. 1 und 3 machen beide deutlich, daß das Außengehäuse 1 mit der Umfangsplatte 14 im Grundsatz in Draufsicht annähernd quadratische Abmessungen hat. Annähernd quadratische Abmessungen heißt, daß auch eine geringfügige Abweichung von genau quadratischen Abmessungen im Rahmen der Lehre zulässig ist. Wesentlich ist, daß das Außengehäuse 1 im Grundsatz ja ein geschlossenes Gehäuse sein soll. Diese geschlossene Gehäuseform wird erfindungsgemäß jedoch für diese transportable Tischkreissäge verlassen, nämlich dergestalt, daß das Außengehäuse 1 eine von der Vorderseite ausgehende, sich über die volle Breite des Außengehäuses 1 unter der Tischplatte 4 und Umfangsplatte 14 erstreckende Ausnehmung 15 aufweist, in der ein Betätigungselement 12, 13, in Fig. 1 ausgeführt als Zugstab 12 mit Knauf 13, für die Schwenkung der Tischplatte 4 frei nach rechts und links schwenkbar angeordnet ist. Man erkennt in Fig. 3 besonders deutlich, daß die Ausnehmung 15 dem Außengehäuse 1 in Seitenansicht eine Gestalt wie ein liegendes U gibt.

In Fig. 1 erkennt man, daß bei zweckmäßiger Gestaltung des Betätigungselementes 12, 13 eine Einhandbedienung realisiert werden kann. Hier erfolgt eine Arretierung durch Schwenken des Knaufs 13 um seine Mittelachse. Man erkennt eine seitlich verlaufende Kulisse 11 für die Einstellung der Seitenneigung des Kreissägeblattes 10.

Mit der Erfindung ist es gelungen, alle Vorteile der verschiedenen, zuvor erläuterten Sägentypen miteinander zu kombinieren.

In vorteilhafter Weise kann man vorsehen, daß die Tischplatte 4 hinsichtlich ihrer Schwenkung zumindest in der Schwenk-Mittelstellung (um die Hochachse), vorzugsweise auch in anderen wesentlichen Schwenk-Winkelstellungen, arretierbar ist. Für die Arretierung der Tischplatte 4 kann man ohne weiteres vorsehen, daß diese durch Anheben des Betätigungselements 12, 13 lösbar ist. Das entspricht einer ergonomisch zweckmäßigen Gestaltung mit der Arbeitsreihenfolge "Anheben, Drehen, Loslassen (nach unten zurückfedern) und dadurch Arretieren".

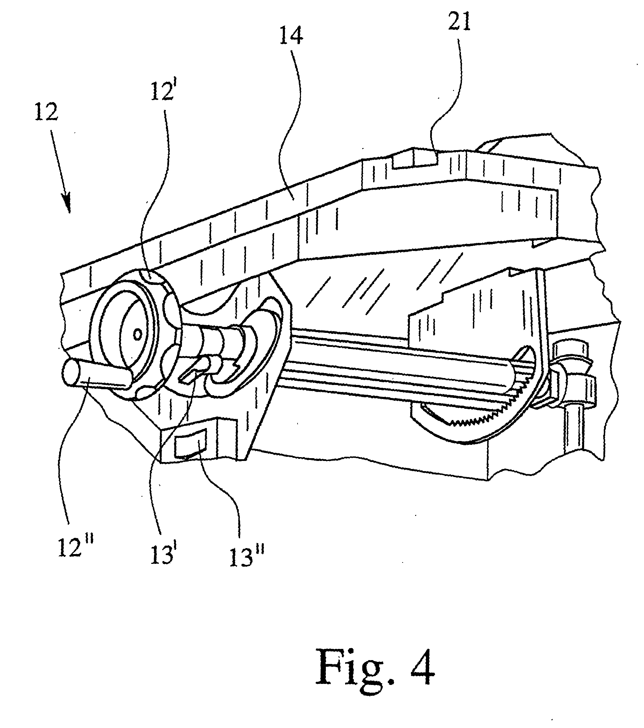

Fig. 3 und Fig. 4 zeigen demgegenüber eine Alternative, bei der die Arretierung der Tischplatte 4 mittels eines Arretierhebels 13' lösbar ist, der am Betätigungselement 12 angeordnet ist. Im übrigen ist hier noch eine Besonderheit, daß an dem Betätigungselement 12 eine Ein/Aus-Schalter 13" angeordnet ist.

Das Betätigungselement 12 selbst hat hier einen äußeren Drehknauf 12', der der Einstellung der Seitenneigung dient und eine Kurbel 12", die eine schnelle Höhenverstellung des Kreissägeblattes 10 gewährleistet.

Man hat hier eine hochkompakte Anordnung mit allen Betätigungseinrichtungen unmittelbar am Betätigungselement 12.

Hier ist weiter zu ergänzen, daß sich diese Maschine besonders für eine Drehzahlregelung und -anzeige anbietet (DE - U - 297 12 892).

Weiter kann man vorsehen, daß das Sägeaggregat 7 in seiner Verschiebe-Mittelstellung und/oder in der hintersten Verschiebestellung und, vorzugsweise, auch noch in anderen Verschiebestellungen arretierbar ist.

Grundsätzlich wäre eine Alternative, die für bestimmte Ausführungsformen einer solchen Tischkreissäge zweckmäßig wäre, daß das Sägeaggregat 7 nur in der Schwenk-Mittelstellung der Tischplatte 4 in Zugrichtung verschiebbar ist. Generell für Unterflur-Zugkreissägen gilt eine Ausgestaltung, die dadurch gekennzeichnet ist, daß das Sägeaggregat 7 in Richtung der hintersten Verschiebestellung federvorgespannt ist.

Aus dem Stand der Technik von Kapp-, Gehrungs- und Tischkreissägen ist es für sich bekannt, daß in der Umfangsplatte 14 ein den Sägeschlitz 9 in der Schwenk-Mittelstellung der Tischplatte 4 verlängerndes Schlitzstück angeordnet ist. Eine solche Konstruktion läßt sich natürlich auch bei der erfindungsgemäßen Tischkreissäge realisieren. Überdies kann man vorsehen, derartige Schlitzstücke, die in der Zeichnung Fig. 1 nicht dargestellt sind, auch in mehreren Winkelstellungen vorzusehen, um auch in mehreren Winkelstellungen die zur Verfügung stehende Schnittlänge zu vergrößern.

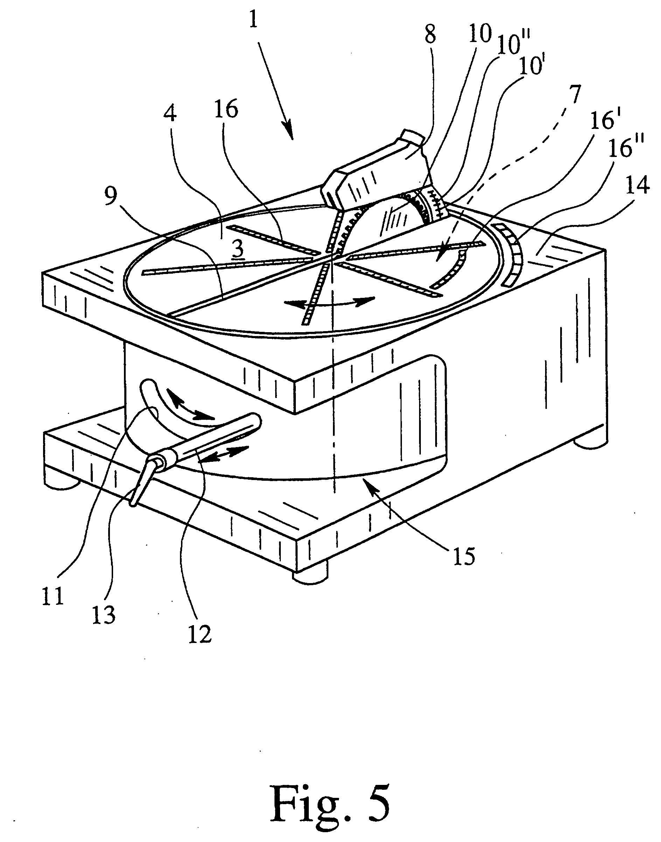

Fig. 5 zeigt eine modifizierte Ausführungsform der erfindungsgemäßen Tischkreissäge, bei der sich seitlich des Kreissägeblattes 10 in jeweils um 45° versetzt zueinander angeordneten Positionen Längenmaßskalen 16 befinden. Man kann so unmittelbar auf der Tischplatte 4 die Länge eines abzutrennenden Abschnittes einstellen und hat gleichzeitig eine Winkelskala realisiert.

Fig. 5 zeigt ferner eine besonders bevorzugte Ausführungsform einer transportablen Tischkreissäge als nämlich die die Werkstückauflagefläche 3 bildende Tischplatte 4 eine auf die Hochachse als Mitte bezogene Winkelskala 16' und die Umfangsplatte 14 eine solche Winkelskala 16" aufweist. Diese Winkelskalen 16', 16", die beide oder auch nur einzeln vorhanden sein können, ermöglichen eine bestimmte Ausrichtung eines Werkstücks gegenüber dem Kreissägeblatt 10 oder das Ablesen bestimmter Zwischenwinkel für bestimmte Schwenkstellungen der Tischplatte 4 gegenüber der Umfangsplatte 14.

In Fig. 5 ist weiter angedeutet, daß an dem mit dem Kreissägeblatt 10 höhenverstellbaren Spaltkeil 10' eine Höhenskala 10" angebracht ist, die die jeweilige Schnitthöhe des Kreissägeblattes 10 ablesbar macht.

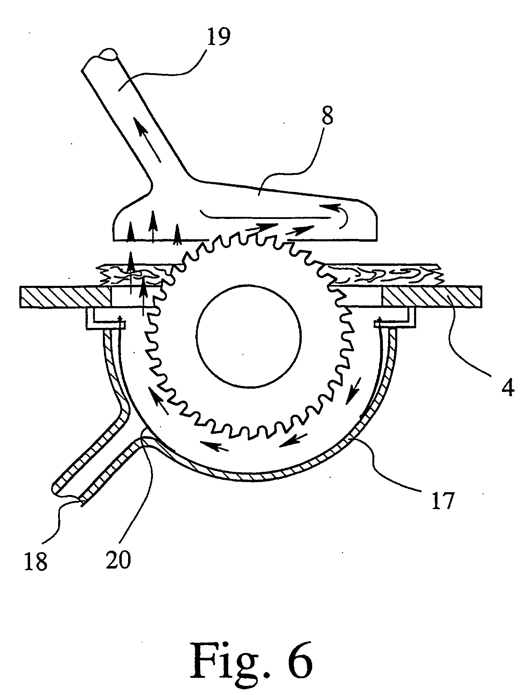

Fig. 6 zeigt eine weitere Ausführung mit einem Späneauffangkasten 17 unterhalb der Tischplatte 4 mit einem Absaugstutzen 18 und dem als Späneabsaughaube ausgestalteten Spaltkeil 8 mit Schutzhaube mit einem daran angebrachten Absaugstutzen 19. Beide Absaugstutzen 18, 19 sind an ein nicht weiter dargestelltes Absauggebläse angeschlossen.

Fig. 6 zeigt nun, daß der Absaugstutzen 18 am Späneauffangkasten 17 geschlossen ist. Dies ist so realisiert, daß dieser Absaugstutzen 18 wahlweise verschließbar ist. Normalerweise sind beide Absaugstutzen 18, 19 offen. Jeder Absaugstutzen 18, 19 benötigt zum reibungslosen Betrieb einen bestimmten Luft-Volumenstrom, damit die erzeugten Sägespäne mitgerissen werden. Das bedeutet einen vergleichsweise hohen Energieaufwand in der Absaugeinrichtung.

Erfindungsgemäß ist erkannt worden, daß man nur über die Späneabsaughaube 8 und deren Absaugstutzen 19 normalerweise alle Späne befriedigend absaugen kann, so daß im Normalfall der Absaugstutzen 18 am Späneauffangkasten 17 geschlossen sein kann. Lediglich bei Durchführung von längeren Verdecktschnitten, bei denen das Kreissägeblatt 10 das Werkstück nicht durchsetzt, muß der Absaugstutzen 18 am Späneauffangkasten 17 geöffnet werden.

Dargestellt ist, daß der Absaugstutzen 18 am Späneauffangkasten 17 durch ein Luftleitblech 20 geschlossen ist, das gleichzeitig eine vorzügliche Leitung der Späne wieder nach oben bewirkt. Im dargestellten Ausführungsbeispiel ist das Luftleitblech 20 an der Tischplatte 4 befestigt und aus Federstahl ausgeführt, so daß es sich der Kontur des Späneauffangkastens 17 einfach anpaßt.

Zum Öffnen des Absaugstutzens 18 kann man das Luftleitblech 20 zur Seite schwenken, man kann aber auch den Späneauffangkasten 17 insgesamt nach unten verlagern und dadurch den Absaugstutzen 18 öffnen. Hier gibt es verschiedene konstruktive Möglichkeiten.

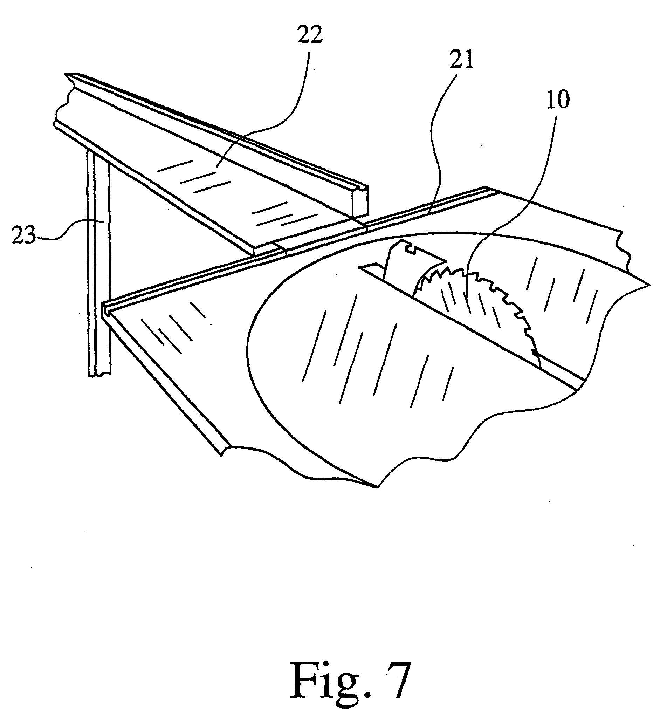

Fig. 3 zeigt bereits, daß an der Umfangsplatte 14 an der Vorderseite und an der Querseiten Anbringungselemente 21, nämlich Anbringungsnuten, für eine Tischverlängerung 22 vorgesehen sind, die in Fig. 7 dargestellt ist. Die Tischverlängerung 22 ist mit einklappbaren Standfüßen 23 und einem Anschlaglineal mit ausziehbarem Anschlag und Längenmaßskala versehen. Interessant ist, daß diese Tischverlängerung 22 wahlweise an jedem der Anbringungselemente 21 angebracht werden kann, weil eben das Außengehäuse 1 mit der Umfangsplatte 14 im wesentlichen quadratisch ist und das Sägeaggregat in jede Richtung ausgerichtet werden kann.

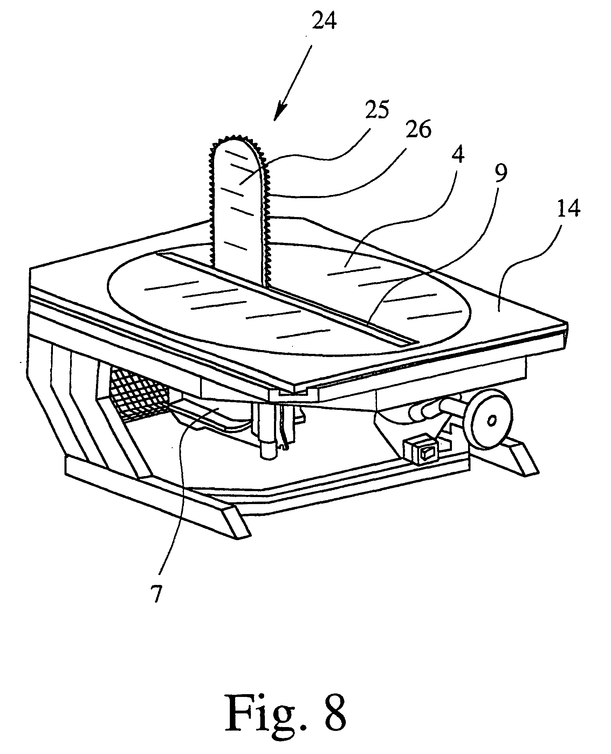

Fig. 8 zeigt schließlich noch eine besondere Darstellung, bei der das Kreissägeblatt des Sägeaggregats 7 durch ein Kettensägeblatt 24 ersetzt worden ist, das mit seiner Längsachse etwa senkrecht zur Werkstückauflagefläche 3 ausgerichtet ist. Das Kettensägeblatt 24 kann nach bevorzugter Ausführung parallel zur Werkstückauflagefläche 3 eine Schnittlänge von 100 bis 200 mm und senkrecht zur Werkstückauflagefläche 3 eine Schnittlänge von 150 bis 400 mm aufweisen. Ein Kettensägeblatt 24 mit blattartigem Kettenträger 25 und umlaufender Sägekette 26 anstelle eines Kreissägeblattes hat eben den Vorteil einer wesentlich größeren Schnittlänge senkrecht zur Werkstückauflagefläche 3, also einer entsprechend größeren maximalen Schnitthöhe.

## Patentansprüche

1. Transportable Tischkreissäge mit einem Außengehäuse (1) mit einer eine Werkstückauflagefläche (3) bildenden, im Außengehäuse (1) nicht wendbar angeordneten Tischplatte (4), Seitenwangen (5) und Querverbindungen (6),
mit einem im Außengehäuse (1) unter der Tischplatte (4) angeordneten Sägeaggregat (7) mit einem Antriebsmotor und einem die Tischplatte (4) von unten her in einem Sägeschlitz (9) durchsetzenden Kreissägeblatt (10),
wobei das Außengehäuse (1) in Draufsicht annähernd quadratische Abmessungen hat,
wobei das Sägeaggregat (7) gegenüber der Tischplatte (4) in Zugrichtung verschiebbar ist, wodurch das Kreissägeblatt (10) sich in Zugrichtung im Sägeschlitz (9) bewegt,
**dadurch gekennzeichnet,**
**daß** die die Werkstückauflagefläche (3) bildende Tischplatte (4) um eine senkrecht zur Werkstückauflagefläche (3) orientierte Hochachse drehbar im Außengehäuse (1), insbesondere in einer Umfangsplatte (14) des Außengehäuses (1), gelagert ist,
**daß** das Sägeaggregat (7) mit der Tischplatte (4) um die Hochachse drehbar ist und
**daß** das Außengehäuse eine von der Vorderseite ausgehende, sich über die volle Breite des Außengehäuses (1) unter der Tischplatte (4) und ggf. Umfangsplatte (14) erstreckende Ausnehmung (15) aufweist, in der ein Betätigungselement (12, 13) für die Schwenkung der Tischplatte (4) frei nach rechts und links schwenkbar angeordnet ist.

2. Tischkreissäge nach Anspruch 1, **dadurch gekennzeichnet, daß** die Tischplatte (4) hinsichtlich ihrer Schwenkung zumindest in der Schwenk-Mittelstellung, vorzugsweise auch in anderen wesentlichen Schwenk-Winkelstellungen, arretierbar ist.

3. Tischkreissäge nach Anspruch 1 oder 2, **dadurch gekennzeichnet, daß** eine Arretierung der Tischplatte (4) durch Anheben des Betätigungselementes (12, 13) lösbar ist.

4. Tischkreissäge nach Anspruch 1 oder 2, **dadurch gekennzeichnet, daß** die Arretierung der Tischplatte (4) mittels eines Arretierhebels (13') lösbar ist, der am Betätigungselement (12) angeordnet ist.

5. Tischkreissäge nach einem der Ansprüche 1 bis 4, **dadurch gekennzeichnet, daß** an dem Betätigungselement (12) ein Ein/Aus-Schalter (13") angeordnet ist.

6. Tischkreissäge nach einem der Ansprüche 1 bis 5, **dadurch gekennzeichnet, daß** das Sägeaggregat (7) in seiner Verschiebe-Mittelstellung und/oder in der hintersten Verschiebestellung und, vorzugsweise, auch noch in anderen Verschiebestellungen arretierbar ist.

7. Tischkreissäge nach einem der Ansprüche 1 bis 6, **dadurch gekennzeichnet, daß** das Sägeaggregat (7) in Richtung der hintersten Verschiebestellung federvorgespannt ist.

8. Tischkreissäge nach einem der Ansprüche 1 bis 7, **dadurch gekennzeichnet, daß** in der Umfangsplatte (14) ein den Sägeschlitz (9) in der Schwenk-Mittelstellung der Tischplatte (4) verlängerndes Schlitzstück angeordnet ist.

9. Tischkreissäge nach Anspruch 8, **dadurch gekennzeichnet, daß** in der Umfangsplatte (14) in mehreren Schwenk-Winkelstellungen der Tischplatte (4) den Sägeschlitz (9) verlängernde Schlitzstücke angeordnet sind.

10. Tischkreissäge nach einem der Ansprüche 1 bis 9, **dadurch gekennzeichnet, daß** die die Werkstückauflagefläche (3) bildende Tischplatte (4) seitlich des Kreissägeblattes (10), insbesondere rechtwinklig und/oder in einem anderen signifikanten Winkel zur Ebene des Kreissägeblattes (10) verlaufend, mindestens eine Längenmaßskala (16) aufweist.

11. Tischkreissäge nach einem der Ansprüche 1 bis 10, **dadurch gekennzeichnet, daß** die die Werkstückauflagefläche (3) bildende Tischplatte (4) und/oder die Umfangsplatte (14) eine auf die Hochachse als Mitte bezogene Winkelskala (16'; 16") aufweist.

12. Tischkreissäge nach einem der Ansprüche 1 bis 11, **dadurch gekennzeichnet, daß** am mit dem Kreissägeblatt (10) höhenverstellbaren Spaltkeil (10') eine Höhenskala (10") angebracht ist.

13. Tischkreissäge nach einem der Ansprüche 1 bis 12, **dadurch gekennzeichnet, daß** dem Kreissägeblatt (10) unterhalb der Tischplatte (4) ein Späneauffangkasten (17) mit Absaugstutzen (18) und oberhalb der Tischplatte (4) eine Späneabsaughaube (8) mit Absaugstutzen (19) zugeordnet ist, wobei beide Absaugstutzen (18, 19) an ein Absauggebläse anschließbar sind und daß der Absaugstutzen (18) am Späneauffangkasten (17) wahlweise verschließbar ist.

14. Tischkreissäge nach Anspruch 13, **dadurch gekennzeichnet, daß** zum Verschließen des Absaugstutzens (18) am Späneauffangkasten (17) ein Luftleitblech (20) vorzugsweise aus Federstahl vorgesehen ist.

15. Tischkreissäge nach einem der Ansprüche 1 bis 14, **dadurch gekennzeichnet, daß** am Außengehäuse (1) bzw. an der Umfangsplatte (14) an der Vorderseite und den Querseiten, ggf. auch an der Rückseite Anbringungselemente (21) für eine Tischverlängerung (22) vorgesehen sind.

16. Tischkreissäge nach einem der Ansprüche 1 bis 15, **dadurch gekennzeichnet, daß** das Sägeaggregat (7) anstatt mit einem Kreissägeblatt mit einem Kettensägeblatt (24) ausgerüstet ist, das mit seiner Längsachse etwa senkrecht zur Werkstückauflagefläche (3) ausgerichtet ist.

17. Tischkreissäge nach Anspruch 16, **dadurch gekennzeichnet, daß** das Kettensägeblatt (24) parallel zur Werkstückauflagefläche (3) eine Schnittlänge von 100 bis 200 mm und senkrecht zur Werkstückauflagefläche (3) eine Schnittlänge von 150 bis 400 mm aufweist.

## Claims

1. A transportable circular table saw comprising an exterior housing (1) with a tabletop (4) forming a work piece support surface (3) being non-reversibly arranged in the exterior housing (1), with side panels (5) and cross bars (6),
comprising a sawing unit (7) being arranged in the exterior housing (1), underneath the tabletop (4), with a drive motor and a circular saw blade (10) protruding into the tabletop (4) from below through a saw slot (9);
wherein the exterior housing (1) is approximately square in shape in top view;
wherein the sawing unit (7) is slidable in the pulling direction in respect to the tabletop (4) as a result of which the circular saw blade (10) moves in the saw slot (9) in the pulling direction,
**characterized in**
**that** the tabletop (4) forming the work piece support surface is rotatably held in the exterior housing (1) with a vertical axis perpendicular to the work piece support surface (3), in particular held in a surrounding top (14) of the exterior housing (1);
**that**, together with the tabletop (4), the sawing unit (7) is rotatable around the vertical axis; and
**that** the exterior housing comprises a recess (15) emanating from the front side and extending across the entire width of the exterior housing (1) under the tabletop (4) and, if applicable, the surrounding top (14); with a control element (12, 13) for swiveling the tabletop (4) being arranged in said recess (15), so as to be freely swivelable to the right and left.

2. Circular table saw according to claim 1, **characterized in that** swiveling of the tabletop (4), at least in the center position of swiveling, can be locked preferably also in other positions with essential swiveling angles.

3. Circular table saw according to claim 1 or 2, **characterized in that** locking of the tabletop (4) can be reversed by lifting the control element (12, 13).

4. Circular table saw according to claim 1 or 2, **characterized in that** locking of the tabletop (4) can be reversed by means of a locking lever (13') arranged on the control element (12).

5. Circular table saw according to any one of claims 1 to 4, **characterized in that** an On/Off switch (13") is arranged on the control element (12).

6. Circular table saw according to any one of claims 1 to 5, **characterized in that** the sawing unit (7) is lockable in its middle sliding position and/or in the rearmost sliding position and, preferably, in other sliding positions as well.

7. Circular table saw according to any one of claims 1 to 6, **characterized in that** the sawing unit (7) is under spring pre-tension towards the rearmost sliding position.

8. Circular table saw according to any one of claims 1 to 7, **characterized in that** the surrounding top (14) comprises a slot, which extends the saw slot (9) in the center swiveling position of the tabletop (4).

9. Circular table saw according to claim 8, **characterized in that** the surrounding top (14) comprises slots which extend the saw slot (9) in several angular swiveling positions of the tabletop (4).

10. Circular table saw according to any one of claims 1 to 9, **characterized in that** the tabletop (4) which forms the work piece support surface (3) comprises at least one linear measurement scale (16) on the side of the circular saw blade (10), in particular aligned at a right angle and/or at another significant angle to the plane of the circular saw blade (10).

11. Circular table saw according to one of claims 1 to 10, **characterized in that** the tabletop (4) forming the work piece support surface (3) and/or the surrounding top (14), comprises an angular scale (16', 16") with reference to the vertical axis as the middle.

12. Circular saw according to any one of claims 1 to 11, **characterized in that** the riving knife (10'), which is height-adjustable together with the circular saw blade (10), comprises a height scale (10").

13. Circular table saw according to any one of claims 1 to 12, **characterized in that** the circular saw blade (10) is allocated a sawdust collection box (17) with an extraction pipe (18) below the tabletop (4) and a sawdust extraction hood (8) with extraction pipe (19) above the tabletop (4); wherein both extraction pipes (18, 19) are connectable to an extraction fan, and wherein the extraction pipe (18) at the sawdust collection box (17) can optionally be closed.

14. Circular saw table according to claim 13, **characterized in that** an air-ducting strip (20) preferably made of spring steel is provided for closing the extraction pipe (18) at the sawdust collection box (17).

15. Circular table saw according to any one of claims 1 to 14, **characterized in that** positioning elements (21) for a table extension (22) have been provided on the exterior housing (1) or at the surrounding top (14) at the front and on the sides and, if necessary, also at the rear.

16. Circular table saw according to any one of claims 1 to 15, **characterized in that** the sawing unit (7) comprises a chainsaw blade (24) instead of a circular saw blade, which is aligned so as to be approximately perpendicular to the work piece support surface (3).

17. Circular table saw according to claim 16, **characterized in that** the cutting length of the chainsaw blade (24) is between 100 and 200 mm parallel to the work piece support surface (3), and between 150 to 400 mm perpendicular to the work piece support surface (3).

## Revendications

1. Scie circulaire d'établi transportable ayant une boîtier externe (1) avec un plateau tabulaire (4) formant une surface d'appui (3) de pièce de travail, disposé dans le boîtier externe (1) de façon à ne pas tourner, des flasques latéraux (5) et des traverses (6), avec un groupe de scie (7) disposé dans le boîtier externe (1) sous le plateau tabulaire (4) avec un moteur d'entraînement et une lame de scie circulaire (10) traversant le plateau tabulaire (4) dans une fente de scie (9), dans laquelle le boîtier externe (1) possède des dimensions approximativement rectangulaires selon une vue de dessus, dans laquelle le groupe de scie (7) peut être déplacé par rapport au plateau tabulaire (4) dans la direction de traction, la lame de scie circulaire (10) se déplaçant ainsi dans la fente de scie (9) dans la direction de traction, **caractérisée en ce que**, le plateau tabulaire formant la surface d'appui (3) de pièce de travail est monté de façon à pouvoir tourner autour d'un axe vertical orienté perpendiculairement à la surface d'appui (3) de pièce de travail dans le boîtier externe (1), en particulier dans un plateau périphérique (14) du boîtier externe (1), **en ce que** le groupe de scie (7) avec le plateau tabulaire (4) peut tourner autour de l'axe vertical et **en ce que** le boîtier externe présente un creux (15) partant du côté avant, s'étendant sur toute la largeur du boîtier externe (1) sous le plateau tabulaire (4) et éventuellement le plateau périphérique (14), creux dans lequel un élément actionneur (12, 13) est disposé de façon pivotable pour pivoter le plateau tabulaire (4) librement vers la droite et vers la gauche.

2. Scie circulaire d'établi selon la revendication 1, **caractérisée en ce que** le plateau tabulaire (4) peut être bloqué en ce qui concerne son pivotement, au moins dans la position médiane de pivotement, de préférence aussi dans d'autres positions angulaires essentielles de pivotement.

3. Scie circulaire d'établi selon la revendication 1ou 2, **caractérisée en ce qu'**un blocage du plateau tabulaire (4) peut être relâché en soulevant l'élément actionneur (12, 13).

4. Scie circulaire d'établi selon la revendication 1 ou 2, **caractérisée en ce que** le blocage du plateau tabulaire (4) peut être relâché au moyen d'un levier de blocage (13') qui est disposé sur l'élément actionneur (12).

5. Scie circulaire d'établi selon l'une quelconque des revendications 1 à 4, **caractérisée en ce qu'**un commutateur marche/arrêt (13") est disposé sur l'élément actionneur (12).

6. Scie circulaire d'établi selon l'une quelconque des revendications 1 à 5, **caractérisée en ce que** le groupe de scie (7) peut être bloqué dans sa position médiane de déplacement et/ou dans la position de déplacement la plus en arrière et, de préférence aussi encore dans d'autres positions de déplacement.

7. Scie circulaire d'établi selon l'une quelconque des revendications 1 à 6, **caractérisée en ce que** le groupe de scie (7) est précontraint élastiquement dans la direction de la position de déplacement la plus en arrière.

8. Scie circulaire d'établi selon l'une quelconque des revendications 1 à 7, **caractérisée en ce qu'**une pièce à fente prolongeant la fente de scie (9) dans la position médiane de pivotement du plateau tabulaire (4) est disposée dans le plateau périphérique (14).

9. Scie circulaire d'établi selon la revendication 8, **caractérisée en ce que** des pièces à fente prolongeant la fente de scie (9) sont disposées dans plusieurs positions angulaires de pivotement du plateau tabulaire (4) dans le plateau périphérique (14).

10. Scie circulaire d'établi selon l'une quelconques des revendications 1 à 9, **caractérisée en ce que** le plateau tabulaire (4) formant la surface d'appui (3) de pièce de travail présente du côté de la lame de scie circulaire (10), au moins une échelle de mesure de longueur (16) se prolongeant en particulier en formant un angle droit et/ou selon un autre angle significatif par rapport au plan de la lame de scie circulaire (10).

11. Scie circulaire d'établi selon l'une quelconque des revendications 1 à 10, **caractérisée en ce que** le plateau tabulaire (4) formant la surface d'appui (3) de pièce de travail et/ou le plateau périphérique (14) présente une échelle angulaire (16'; 16") rapportée à l'axe vertical en tant que centre.

12. Scie circulaire d'établi selon l'une quelconque des revendications 1 à 11, **caractérisée en ce qu'**une échelle de hauteur (10") est posée sur le coin à refendre (10') ajustable en hauteur avec la lame de scie circulaire (10).

13. Scie circulaire d'établi selon l'une quelconque des revendications 1 à 12, **caractérisée en ce qu'**une boîte (17) interceptant les copeaux avec une tubulure d'aspiration (18) et au-dessus du plateau tabulaire (4) un capot d'aspiration de copeaux (8) avec tubulure d'aspiration (19) sont associés à la lame de scie circulaire (10) sous le plateau tabulaire (4), dans laquelle les deux tubulures d'aspiration (18, 19) peuvent être raccordées à une soufflerie d'aspiration, et **en ce que** la tubulure d'aspiration (18) sur la boîte interceptant les copeaux (17) peut être fermée facultativement.

14. Scie circulaire d'établi selon la revendication 13, **caractérisée en ce qu'**une tôle déflectrice d'air (20) de préférence en acier à ressort, est prévue sur la boîte interceptant les copeaux (17) pour fermer la tubulure d'aspiration (18) .

15. Scie circulaire d'établi selon l'une quelconque des revendications 1 à 14, **caractérisée en ce que** des éléments de pose (21) sont prévus pour une rallonge de table (22) sur le boîtier externe (1) ou bien sur le plateau périphérique (14) sur le côté avant et les côtés latéraux, éventuellement aussi sur le côté arrière.

16. Scie circulaire d'établi selon l'une quelconque des revendications 1 à 15, **caractérisée en ce que** le groupe de scie (7) est équipé d'une lame de scie à chaîne (24) au lieu d'une lame de scie circulaire, qui est orientée avec son axe longitudinal approximativement perpendiculairement à la surface d'appui (3) de la pièce de travail.

17. Scie circulaire d'établi selon la revendication 16, **caractérisée en ce que** la lame de scie à chaîne (24) présente une longueur de coupe de 100 à 200 mm parallèlement à la surface d'appui (3) de pièce de travail et présente une longueur de coupe de 150 à 400 mm perpendiculairement à la surface d'appui (3) de pièce de travail.
